(19) **Europäisches Patentamt / European Patent Office / Office européen des brevets**

(11) **EP 4 249 455 B1**

(12) **EUROPEAN PATENT SPECIFICATION**

(45) Date of publication and mention
of the grant of the patent:
**18.12.2024 Bulletin 2024/51**

(21) Application number: **22382269.3**

(22) Date of filing: **24.03.2022**

(51) International Patent Classification (IPC):
**C05F 5/00** *(2006.01)*     **C05F 17/00** *(2020.01)*
**C05F 17/60** *(2020.01)*     **C05G 5/20** *(2020.01)*

(52) Cooperative Patent Classification (CPC):
(C-Sets available)
**C05F 17/00; C05F 11/02; C05F 17/50; C05F 17/60; C05F 17/70; C05G 5/20** (Cont.)

(54) **PROCEDURE FOR OBTAINING ORGANIC LIQUID FERTILIZER RICH IN HUMIC SUBSTANCES OF VEGETABLE ORIGIN**

VERFAHREN ZUR GEWINNUNG EINES ORGANISCHEN FLÜSSIGDÜNGERS MIT HOHEM GEHALT AN HUMINSUBSTANZEN PFLANZLICHEN URSPRUNGS

PROCÉDURE D'OBTENTION D'ENGRAIS LIQUIDE ORGANIQUE RICHE EN SUBSTANCES HUMIQUES D'ORIGINE VÉGÉTALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.09.2023 Bulletin 2023/39**

(73) Proprietor: **Universidad de Almeria**
**04120 Cañada de San Urbano, Almeria (ES)**

(72) Inventors:
• **LÓPEZ LÓPEZ, Maria José**
La Cañada de San Urbano (ALMERÍA) (ES)
• **SUAREZ ESTRELLA, Francisca**
La Cañada de San Urbano (ALMERÍA) (ES)
• **JURADO RODRÍGUEZ, Macarena**
La Cañada de San Urbano (ALMERÍA) (ES)
• **LÓPEZ GONZÁLEZ, Juan Antonio**
La Cañada de San Urbano (ALMERÍA) (ES)
• **CHIESA, Stefano**
Canneto sull'Oglio (MN) (IT)
• **CHIESA, Alessandro**
Canneto sull'Oglio (MN) (IT)
• **VIGNALI, Giuseppe**
Parma (IT)

(74) Representative: **Pons**
**Glorieta Rubén Darío 4**
**28010 Madrid (ES)**

(56) References cited:
**CN-A- 108 276 031     ES-A1- 2 286 917**

• **AGRIMAX: "Factsheet: Using tomato waste to make agricultural fertilisers", 30 May 2017 (2017-05-30), pages 1 - 2, XP055953183, Retrieved from the Internet <URL:https://agrimax.iris-eng.com/wp-content/uploads/2017/05/Using-tomato-waste-to-make-agricultural-fertilisers.pdf> [retrieved on 20220819]**
• **ANONYMOUS: "Compost - Wikipedia", 23 March 2022 (2022-03-23), pages 1 - 22, XP055953349, Retrieved from the Internet <URL:https://en.wikipedia.org/w/index.php?title=Compost&oldid=1078783594> [retrieved on 20220822]**

(52)  Cooperative Patent Classification (CPC): (Cont.)

C-Sets
**C05F 11/02, C05G 5/20**

## Description

The present invention refers to a procedure for obtaining an organic liquid fertilizer rich in humic substances that has beneficial effects on plants and soil fertility and allows the revaluation of vegetable waste.

## STATE OF THE ART

Soil fertilization with mineral fertilizers has led to several problems such as nitrate contamination and loss of soil carbon, as well as high application costs for the farmer. Fortunately, organic fertilization today represents a sustainable alternative to other less environmentally friendly practices. This type of fertilization leads to an efficient use of resources, improved crop yields, as well as minimizing the environmental impact that occurs with the use of mineral fertilizers. In addition, the production of such products is more efficient due to lower energy consumption and $CO_2$ emissions (Skinner et al., 2014. Science of The Total Environment Vol. 468-469, 553-563). For all these reasons, there is a current trend to use organic waste as fertilizer, especially those from intensive agricultural activity as well as from agri-food industry.

After harvesting tomato fruits, huge amounts of biomass residues are left on the field, namely tomato harvest stalks, tomato plant wastes or residual biomass. These wastes are mainly composed of lignin (19%), hemicellulose (14%), cellulose (50%) and pectin (5%) and are therefore valuable resources for further applications (Ercolano M.R. et al., 2015. Biomass Bioenergy 72, 242-250). In this sense, composting is an efficient, cost-effective and environmentally safe biological process for the recycling of a wide variety of organic wastes into new cropping production cycles. It is a simple technology consisting of user-friendly composting plants where organic wastes are transformed and stabilized through an aerobic bioxidation. Risks of plant pathogen dissemination and phytotoxicity hazards are eliminated when an effective sanitation of organic wastes is achieved through a thermophilic composting process before amendment to soils.

Fertilizer quality and profits of compost obtained from tomato plant residues can be further improved by means of extracting its components. In agriculture, the use of soluble bio-waste derived substances in low concentrations, instead of conventional mineral and organic nitrogen fertilizers, could help improving plant growth and crop production in an inexpensive way. Simultaneously, the environmental impact is minimized (Ertani, A. et al., 2013. Journal of Geochemical Exploration 129, 103-111). These compounds are defined as bio-stimulants and include humic-like substances (HLS) among others. HLS can increase plant growth or even make a crop less susceptible to stressful conditions by several modes of action: activation of numerous plant metabolism pathways, increased activity of several soil enzymes, stimulation of microbial activity and an enhanced production of hormones in the soil or growth regulators in plants (Ertani, A. et al., 2013. Journal of Geochemical Exploration 129, 103-111; Jindo, K. et al., 2020. Agronomy 10, 640; Nardi, S. et al., 2021. Molecules 26, 2256; Shah, Z.H. et al., 2018. Frontiers in Plant Science 9, 263). Currently, these beneficial substances are extracted from non-renewable sources such as peat, leonardite or lignite. The basic HLS extraction process usually involves an alkaline hydrolysis (pH > 10) of feedstocks at high temperature and a further concentration step to reach the required HLS concentration, ranging from 15 to 85% (Lamar, R.T. et al., 2014. Journal of AOAC International 97, 721-730). The extraction of HLS from renewable sources such as compost provides a more sustainable route in comparison the commercial one used nowadays.

HLS are usually divided into three fractions with different chemical properties: (i) Humic acid (HA) and (ii) Fulvic acid (FA) are two alkali-extractable fractions that precipitate at pH <2 or pH >2 respectively, and (iii) Humins, that is a non-alkali extractable fraction. HAs and FAs represent the major part of humic substances. HAs are polycondensed polymers of different molecular weights while FAs contain a lower mass fraction. After composting, the HAs content increases significantly, which results in organic matter stability and indicates that the compost is mature enough for land application. In general, immature composts contain a high FAs content and a relatively low HAs content, while HAs dominates in mature composts.

Numerous composted wastes have been used for HLS extraction, such as sewage sludge, household wastes and several animal, agrifood and agricultural residues, with tomato residues among them (Valdrighi, M.M. et al., 1996. Agriculture Ecosystems and Environment 58, 133-144; Eyheraguibel, B. et al., 2008. Bioresource Technology 99, 4206-4212). The amount of humic substances in the samples extracted depends on humic content in the compost that is subjected to hydrolysis (Jurado, M.M. et al., 2014. Journal of Environmental Management 133, 355-364). Thus, analysis of the material during composting is usually required to establish the optimum composting time for humic substances extraction (Vargas-Garcia, M.C., et al., 2006. Process Biochemistry 41, 1438-1443).

The interest aroused in relation to the benefits of humic substances in agriculture has led to the development of new lines of research on the effect of humic acids of different origins such as fossil lignin (leonardite) or vegetable waste compost on the crop yields and soil quality (Valdrighi, M.M. et al., 1995. Compost Science and Utilization 3(1), 30-38.; Vallini, G. et al., 1997. Biology and Fertility of Soils 24, 243-248, 1997; Suárez-Estrella, F. et al., 2008. Dynamic Soil, Dynamic Plant 2 (Special Issue 1), 90-95; Suárez-Estrella, F. et al., 2008. Dynamic Soil, Dynamic Plant 2 (Special Issue 1), 96-102). Some procedures to obtain organic fertilizers are known in the state of the art. For example, document CN111233582A discloses a procedure that produces the biological organic fertilizer by mixing and fermenting the plant straws, the biogas slurry and the vinasse, decomposes organic substances in the solid waste by utilizing the action of microorganisms to obtain clinker which is rich in organic matters. Document CN105218178A relates to a method for preparing an organic fertilizer from tomato stalks and mushroom residue that also including a fermentation step. However, although various liquid fertilizers containing humic acids have been commercialized for use on grass, horticultural plants or crop production (Eyheraguibel, B. et al., 2008. Bioresource Technology 99, 4206-4212), their use remains controversial because of heterogeneity (Brown et al., 2014. Advances in Agronomy 124, 37). The factsheet: "Using tomato waste to make agricultural fertilisers", (XP055953183, URL:https://agrimax.iris-eng.com/wp-content/uploads/2017/05/Using-tomato-waste-to-make-agricultural-fertilisers.pdf) discloses employing tomato plant waste for making a liquid fertilizer.

One of the main values and advantages of the process described here is that it does not depend on nonrenewable sources (such as leonardite), which makes it an optimal and environmentally sustainable alternative. On the other hand, while other processes start directly from the material to be extracted, the present invention aims to link the process of revalorization of vegetable waste by composting, with the protocol for obtaining a liquid humic concentrate, once the bioxidative (thermophilic) phase of the process has elapsed. Furthermore, another of the most remarkable aspects of the present invention is that the solid fraction derived from the extraction process is transferred to a new compost pile in the bioxidative phase, after pH adjustment with $CaSO_4$, or it is mixed with blonde peat for its formulation as a germination medium. The aim is to develop a process that generates zero waste.

Another unique aspect of the inventive process is the starting material. The production of Hydrocompost specifically from tomato and maize waste under very specific conditions and proportions is described. The same type (and quantity) of material is always used and, consequently, the physico-chemical characterization of different batches of the product can be more similar, giving homogeneity and quality to the final product.

## DESCRIPTION OF THE INVENTION

The invention relates a procedure to prepare a concentrated humic fertilizer, said fertilizer also called hydrocompost in the present invention, from tomato plant residues (stalk and leaves), tomato cull and corn stover after applying composting and thermal-alkaline hydrolysis.

Then, the present invention relates to a procedure for the obtention of a liquid fertilizer, which is rich in humic substances, that comprise the following steps:

a) shredding the starting material, wherein the starting material comprises:

- tomato plants residues,
- tomato cull and
- corn stover,

b) mixing, preferably by a tractor, the shredded materials tomato plant residues, tomato cull and corn stover in a weight ratio of 0.2:0.5:0.3, respectively (this proportion allows to reach a C:N ratio between 20 and 30) and adding water to the mixture to reach 55-60% moisture level,
c) composting (also referred as bioxidative phase) the mixture obtained in the previous step b) by maintaining it at a temperature between 55 and 65 oC for a time between 45 days and 3 months, wherein turning operations are performed when the temperature decreases and water is also added during each turning operation to maintain a 55-60% moisture level;
d) thermal-alkaline hydrolysis of the compost obtained in the previous step c) by contacting the compost with an alkaline solution at pH 11-13, heated at a temperature between121 and 124 oC and then cooled down to a temperature between 20 and 30 oC,
e) separation of the liquid phase from the solids obtained in previous step d),
f) concentration of the liquid separated in the previous step e) by evaporation.

The term "tomato plants residues" refers to vegetative parts of the plant left on the ground after harvest. Preferably, the tomato plants comprise talks and leaves of said plants.

The term "tomato cull" refers in the present invention to tomatoes that are removed from the packaging process because of damage or other reasons that make the tomatoes unsuitable for packaging. They are defective tomatoes.

The term "corn stover" as used herein refers to the aboveground stalks, leaves and husks that remain after corn grain is harvested.

By the term "alkaline solution" means a solution of an oxide or hydroxide of an alkali metal or alkaline earth metal.

As for the original raw material, the diversity of tomato plant residues (leaves, stems, fruits...) as well as other plant as corn stover have been taken into account to adjust the initial carbon/nitrogen ratio. The starting material is mixed in the adequate quantity to reach the optimum Carbon:Nitrogen ratio of 20-30:1. Carbon to Nitrogen ratio (C:N) is a ratio of the mass of carbon to the mass of nitrogen in a substance/composition. Preferably, the starting materials have a horticultural origin.

In a preferred embodiment, the starting material is shredding until a particle size of 2-5 cm. Preferably, this shredding is carried out by a diesel oil shredder, which provides the mentioned particle size.

The composting or bioxidative phase is characterized by high temperatures, elevated oxygen consumption, and the production of gaseous and liquid emissions. It usually lasts between 45 days and 3 months. The influence of the time factor is crucial in obtaining a quality mature compost. This phase of the procedure is complete when there is no temperature increase after turning the compost.

According to the invention, in the composting step c), turning operations are performed when the temperature decreases, preferably every 1 to 2 weeks. Water is also added during each turning operation to maintain a 55-60% moisture level.

In a preferred embodiment, the alkaline solution used in the thermal-alkaline hydrolysis is a KOH solution, more preferably KOH 0.4% (w:v).

In a preferred embodiment, thermal-alkaline hydrolysis is carried out at 121 ºC and /or for 2 h.

The separation of step e) is carried out in a decanter.

In a preferred embodiment, the liquid is concentrated in 10 times in step f).

In the present invention it has been determined that the elaboration of a liquid product, rich in humus, from compost of vegetable origin is a successful solution, not only for the revaluation of vegetable waste, but also to enlarge the products and applications of compost, which produces important beneficial effects on plants growth. The product obtained favors the growth of tomato plants at both aerial and root level.

The liquid product, rich in humus, obtained from vegetable compost (also referred as hydrocompost) is also fully in line with current trends in the application of organic matter through fertigation techniques.

Other aspect of the invention refers the liquid fertilizer rich in humic substances obtained according to the procedure described above.

A last aspect of the invention refers to the use of the liquid fertilizer obtained according to the procedure described above for the stimulation of germination and radicle elongation of seeds and/or for plant growth promotion at aerial and root level in tomato plants.

A preferred embodiment refers to the use of the liquid fertilizer obtained according to the procedure described above in soils or substrates at concentrations of 0.2-0.7 % by volume (v:v) in water for the stimulation of germination and radicle elongation of seeds and/or for plant growth promotion at aerial and root level in tomato plants.

A preferred embodiment refers to the use of the liquid fertilizer obtained according to the procedure described above in soils or substrates at concentrations below 0.4% (v:v), more preferably, 0.2 % (v:v), for the stimulation of germination and radicle elongation of seeds.

Another preferred embodiment refers to the use of the liquid fertilizer obtained according to the procedure described above in soils or substrates at concentrations of 0.7% for plant growth promotion at aerial and root level in tomato plants.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples are provided by way of illustration and are not intended to be limiting of the present invention.

## EXAMPLES

An example of the procedure of the present invention is indicated below in order to clarify the invention, without limiting the scope of the invention. This example describes, among other aspects, the preparation procedure of hydrocompost and the application of the product on tomato seeds and plants, as compared to other commercial humic substances.

## Example 1: Preparation of a liquid fertilizer rich in humic substances according to the present invention:

a) Material shredding

The first step in the production of hydrocompost is the implementation of a composting procedure. Firstly, raw material must be shredded. In addition to the tomato plants (stalks and leaves) and tomato cull, a third material is required for composting to reach the optimum Carbon:Nitrogen ratio of 25-30:1. This material is corn stover (stalks and leaves). The stalks and leaves of tomato plant (170 kg), tomato cull (505 kg) and corn (300 kg) are shredded separately, 1-2 days before composting, to reach a particle size distribution of 2-5 cm. Shredding is performed outdoors.

b) Mixing and piling

The three components (shredded tomato plant, cull tomato and corn stover) are mixed (weight ratio of 0.2:0.5:0.3 respectively). A tractor loader moves the materials from the shredding and storage area to the composting site. Water from flotation tank (86 L) at ambient conditions, is added using a hose during mixing to reach the optimum 60% moisture level required for composting. The mixed material is collected in a pile, 1.2m high x 1.5m wide x 1.5m long.

c) Composting: bio-oxidative phase

After building the pile, the temperature is checked daily with a 1m long temperature probe. The temperature increases inside the pile from the first day and after 1-2 days, reaches values greater than 60 ºC during the first stages of the procedure. Temperature is a key factor to ensure sufficient sanitisation and the procedure should maintain a temperature of 55 ºC or higher for 2 weeks or 65 ºC for 1 week. When the temperature decreases below the chosen value the pile should be agitated with a compost turning machine, after each turning operation, the temperature should increase. Turning operations are usually performed every 1 to 2 weeks, depending on the thermal profile. Ambient water is also added during each turning operation, to the top of the pile, to maintain a 60% moisture level. The temperature peaks decrease after each turning operation. This phase of the procedure is complete when there is no temperature increase after turning the compost. This phase is characterized by high temperatures, elevated oxygen consumption, and the production of gaseous and liquid emissions. It usually lasts for, 45 days but can last up to 3 months depending on the thermal profile. Leachate (run-off) produced during this phase is collected in an underground tank (-100 L) and then transferred to an anaerobic digester. Part of the material (28.6 Kg wet weight, 20 kg dry weight) at the end of this phase (in this example this first phase lasted 45 days) is used in the next step for hydrocompost production.

d) Thermal-alkaline hydrolysis:

Part of the compost (28.6kg) obtained after 45 days composting is stored at ambient conditions in a container and manually transported to the thermal-alkaline treatment unit. The compost is fed into the hydrolysis tank which is a stainless-steel vessel with a 300 L capacity, a water jacket for temperature control and a stirrer mixer. A 20 kg dry weight of compost and 200 L of KOH solution (0.4%) are loaded into the tank at ambient conditions. The mixture (which should be pH 11) is heated at 121 ºC for 2 hours and then cooled down.

e) Liquid separation:

After the thermal treatment, the alkaline solution is separated from the solids using a decanter. The liquid phase is returned to the tank for concentration. The solid phase is transferred to a new bio-oxidation composting pile after pH adjustment (pH 7-8) with $CaSO_4$, mixed with blond peat for formulation as germination media or used as fertiliser. Utilities: decanter (electricity), separation trommel (electricity).

f) Liquid concentration:

The liquid hydrolysate separated in the decanter is sent to the tank for concentration where it is 10 times concentrated through evaporation. The resulting hydrocompost should have a volume of 20L.

This procedure allows to obtain 20 L of concentrated humic extract from 28.6 kg of compost (wet weight) with high humic content.

## Example 2: Application of HYDROCOMPOST in watercress seeds

a) Dilutions of 50%, 25%, 10%, 5%, 4%, 3% and 2% (v:v) in sterile distilled water were prepared from the hydrocompost obtained according to Example 1. The pH and conductivity (mS/cm) of all dilutions were measured.

b) 5 mL of the extracts prepared in a) were added on sterile filter paper discs, placed inside 90 mm diameter Petri dishes and then 100 cress seeds were tested per dilution (25 per Petri dish).

c) Step b) was repeated, but this time using distilled water

d) The plates prepared in b) were kept in incubation at 25 °C and protected from light for 48 hours.

e) After 48 hours the germination index was determined according to the formula of Zuconni et al. (1985) (Zucconi, F., et al. 1985. In: Composting of Agricultural and other Wastes, Elsevier Applied Science Publication, New York, 1985, pp. 73-86).

$$G.I. = (\%G \times RL\ /\ \%Go \times Rlo) \times 100$$

%G: Number of germinated seeds with respect to the total (%) using the hydrocompost %Go: No. of seeds germinated with respect to the total (%) using distilled water
LR: Mean root length of seeds in the product.
Lro: Mean root length of seeds in the control.

f) Steps a) b), c) and d) were repeated, but this time using a hydrocompost concentration of 0.2%, 0.4%, 0.6%, 0.5% and 1% (v:v).

g) Concentrated extracts above 5% were phytotoxic on cress seeds, since the germination rate was less than 60%.

h) Concentrated extracts below 2% were not phytotoxic in watercress seeds.

i) Concentrated extracts below 0.4% were found to be phytostimulants of germination and root elongation in watercress seeds

**Example 3: Application of HYDROCOMPOST on tomato crop**

a) Hydrocompost obtained in Example 1 was diluted at 0.7% (v:v).

b) Along 8 weeks, between 6-10 mL of the product obtained in a) were weekly applied in soil or substrate comprising tomato seedlings, increasing 1 mL every 2 weeks.

c) Every week growth parameters were measured (stem length, stem diameter, leaf, fruit and inflorescent number).

d) During the experiment, destructive samplings were also carried out every 20 days after transplanting (dat: 0, 20, 38, 53 days). Several plants were chosen at random, carefully removed from the substrate and immersed in water in order to remove the remains stuck to the root of the plant. Subsequently, the plants were taken to the laboratory and washed with tap water, dried with filter paper, and finally, fresh and dry biomass analyses were carried out.

e) In terms of plant size, the application of hydrocompost in tomato seedlings resulted in larger plants (length and thickness) compared to the control plants.

f) The effect of hydrocompost application on tomato plants resulted in a slight increase in inflorescence and fruit biomass compared to the control, especially after the emergence of the fourth pod (fifth and sixth week after transplanting).

g) The main benefits on the tomato plants were mainly detected from the analyses carried out after four weeks after transplanting (third pod).

**Claims**

1.  Procedure for the obtention of a liquid fertilizer that comprise the following steps:

    a) shredding the starting material, wherein the starting material comprises:

    - tomato plants residues, which refers to vegetative parts of the plant left on the ground after harvest
    - tomato cull and
    - corn stover,

    b) mixing the shredded materials tomato plant residues, tomato cull and corn stover in a weight ratio of 0.2:0.5:0.3, respectively, and adding water to the mixture to reach 55-60% moisture level,

    c) composting the mixture obtained in the previous step b) by maintaining it at a temperature between 55 and 65 °C for a time between 45 days and 3 months, wherein turning operations are performed when the temperature decreases and water is also added during each turning operation to maintain a 55-60% moisture level,

    d) thermal-alkaline hydrolysis of the compost obtained in the previous step c) by contacting the compost with an alkaline solution at pH 11-13, heated at 121-124 °C and then cooled down to a temperature between 20 and 30 °C,

    e) separation of the liquid phase from the solids obtained in previous step d),

    f) concentration of the liquid separated in the previous step e) by evaporation.

2.  Procedure, according to claim 1, wherein the starting material is shredding until a particle size of 2-5 cm.

3.  Procedure, according to any of the previous claims, wherein the alkaline solution used in the thermal-alkaline hydrolysis is a KOH solution.

4.  Procedure, according to any of the previous claims, wherein the thermal-alkaline hydrolysis is carried out at 121°C.

5.  Procedure, according to any of the previous claims, wherein the thermal-alkaline hydrolysis is carried out for 2 h.

6.  Procedure, according to any of the previous claims, wherein the separation of step e) is carried out in a decanter.

7.  Procedure, according to any of the previous claims, wherein the liquid is concentrated in 10 times in step f).

8.  Liquid fertilizer obtained according to the procedure described in any of claims 1 to 7.

9.  Use of the liquid fertilizer obtained according to the procedure described in any of claims 1 to 7 for the stimulation of germination and radicle elongation of seeds and/or for plant growth promotion at aerial and root level in tomato plant

10. Use, according to claim 9, in soils or substrates at concentrations of 0.2-0.7 % (v:v) in water.

11. Use according to claim 10 at concentration below

EP 4 249 455 B1

0,4% (v:v) for the stimulation of germination and radicle elongation of seeds.

12. Use, according to claim 10, at concentrations of 0.7% (v:v) for plant growth promotion at aerial and root level in tomato plants.

**Patentansprüche**

1. Verfahren zur Gewinnung eines flüssigen Düngemittels, das die folgenden Schritte umfasst:

a) Zerkleinern des Ausgangsmaterials, wobei das Ausgangsmaterial Folgendes umfasst:

- Reste von Tomatenpflanzen, was sich auf vegetative Pflanzenteile bezieht, die nach der Ernte auf dem Boden liegenbleiben,
- Tomatenausschuss und
- Maisstroh,

b) Mischen der zerkleinerten Materialien mit Tomatenpflanzenresten, Tomatenausschuss bzw, Maisstroh in einem Gewichtsverhältnis von 0,2:0,5:0,3 und Zugeben von Wasser zu der Mischung, um einen Feuchtigkeitsgehalt von 55-60 % zu erreichen,
c) Kompostieren der im vorherigen Schritt b) erhaltenen Mischung durch Halten bei einer Temperatur zwischen 55 und 65 °C für einen Zeitraum zwischen 45 Tagen und 3 Monaten, wobei die Wendevorgänge bei sinkender Temperatur durchgeführt werden und ferner bei jedem Wendevorgang Wasser zugegeben wird, um einen Feuchtigkeitsgehalt von 55-60 % aufrechtzuerhalten,
d) thermo-alkalisches Hydrolysieren des im vorherigen Schritt c) erhaltenen Komposts durch In-Kontakt-Bringen des Komposts mit einer alkalischen Lösung bei einem pH-Wert von 11-13, Erwärmen auf 121-124 °C und anschließendes Abkühlen auf eine Temperatur zwischen 20 und 30 °C,
e) Trennen der flüssigen Phase von den im vorherigen Schritt d) erhaltenen Feststoffen,
f) Konzentrieren der im vorherigen Schritt e) abgetrennten Flüssigkeit durch Verdampfen.

2. Verfahren nach Anspruch 1, wobei das Ausgangsmaterial bis zu einer Partikelgröße von 2-5 cm zerkleinert wird.

3. Verfahren nach einem der vorhergehenden Ansprüche, wobei die bei der thermo-alkalischen Hydrolyse verwendete alkalische Lösung eine KOH-Lösung ist.

4. Verfahren nach einem der vorhergehenden Ansprüche, wobei die thermoalkalische Hydrolyse bei 121 °C durchgeführt wird.

5. Verfahren nach einem der vorhergehenden Ansprüche, wobei die thermoalkalische Hydrolyse für 2 h durchgeführt wird.

6. Verfahren nach einem der vorhergehenden Ansprüche, wobei die Trennung von Schritt e) in einem Dekanter durchgeführt wird.

7. Verfahren nach einem der vorhergehenden Ansprüche, wobei die Flüssigkeit in Schritt f) zehnfach konzentriert wird.

8. Flüssiges Düngemittel, das gemäß dem Verfahren, wie in einem der Ansprüche 1 bis 7 beschrieben, gewonnen wird.

9. Verwendung des flüssigen Düngemittels, das gemäß dem Verfahren, wie in einem der Ansprüche 1 bis 7 beschrieben, gewonnen wird, zur Stimulierung der Keimung und Keimwurzelstreckung von Samen und/oder zur Förderung des Pflanzenwachstums auf Luft- und Wurzelebene bei Tomatenpflanzen.

10. Verwendung nach Anspruch 9 in Böden oder Substraten in Konzentrationen von 0,2-0,7 Vol.-% in Wasser.

11. Verwendung nach Anspruch 10 in einer Konzentration von unter 0,4 Vol.-% zur Stimulierung der Keimung und Keimwurzelstreckung von Samen.

12. Verwendung nach Anspruch 10 in Konzentrationen von 0,7 Vol.-% zur Förderung des Pflanzenwachstums auf Luft- und Wurzelebene bei Tomatenpflanzen.

**Revendications**

1. Procédure pour l'obtention d'un engrais liquide comprenant les étapes suivantes :

a) déchiquetage de la matière première, la matière première comprenant :

- des résidus de plants de tomates, qui fait référence aux parties végétatives de la plante laissées sur le sol après la récolte
- des déchets de tomates et
- des tiges de maïs,

b) mélange des matières broyées résidus de plants de tomates, déchets de tomates et tiges de maïs selon un rapport pondéral de 0,2:0,5:0,3, respectivement, et ajout d'eau au mélange pour atteindre un taux d'humidité de 55 à 60 %,

c) compostage du mélange obtenu à l'étape b) précédente en le maintenant à une température comprise entre 55 et 65 °C pendant une durée comprise entre 45 jours et 3 mois, les opérations de retournement sont effectuées lorsque la température diminue et de l'eau est également ajoutée pendant chaque opération de retournement pour maintenir un taux d'humidité de 55 à 60 %,

d) hydrolyse thermo-alcaline du compost obtenu à l'étape c) précédente par mise en contact du compost avec une solution alcaline à pH 11 à 13, chauffé à 121 à 124 °C puis refroidi à une température comprise entre 20 et 30 °C,

e) séparation de la phase liquide des solides obtenus à l'étape d) précédente,

f) concentration du liquide séparé à l'étape e) précédente par évaporation.

2. Procédure, selon la revendication 1, dans laquelle la matière première est déchiquetée jusqu'à une taille de particules de 2 à 5 cm.

3. Procédure, selon l'une quelconque des revendications précédentes, dans laquelle la solution alcaline utilisée dans l'hydrolyse thermo-alcaline est une solution de KOH.

4. Procédure, selon l'une quelconque des revendications précédentes, dans laquelle l'hydrolyse thermo-alcaline est réalisée à 121 °C.

5. Procédure, selon l'une quelconque des revendications précédentes, dans laquelle l'hydrolyse thermo-alcaline est réalisée pendant 2 h.

6. Procédure, selon l'une quelconque des revendications précédentes, dans laquelle la séparation de l'étape e) est réalisée dans un décanteur.

7. Procédure, selon l'une quelconque des revendications précédentes, dans laquelle le liquide est concentré 10 fois à l'étape f).

8. Engrais liquide obtenu selon la procédure décrite dans l'une quelconque des revendications 1 à 7.

9. Utilisation de l'engrais liquide obtenu selon la procédure décrite dans l'une quelconque des revendications 1 à 7 pour la stimulation de la germination et de l'allongement radiculaire de graines et/ou pour la promotion de la croissance végétale au niveau aérien et racinaire dans un plant de tomates.

10. Utilisation, selon la revendication 9, dans des sols ou des substrats à des concentrations de 0,2 à 0,7 % (v:v) dans de l'eau.

11. Utilisation selon la revendication 10 à une concentration inférieure à 0,4 % (v:v) pour la stimulation de la germination et de l'allongement radiculaire de graines.

12. Utilisation, selon la revendication 10, à des concentrations de 0,7 % (v:v) pour promouvoir la croissance végétale au niveau aérien et racinaire dans des plants de tomates.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111233582 A
- CN 105218178 A

**Non-patent literature cited in the description**

- **SKINNER et al.** *Science of The Total Environment,* 2014, vol. 468-469, 553-563
- **ERCOLANO M.R. et al.** *Biomass Bioenergy,* 2015, vol. 72, 242-250
- **ERTANI, A. et al.** *Journal of Geochemical Exploration,* 2013, vol. 129, 103-111
- **JINDO, K. et al.** *Agronomy,* 2020, vol. 10, 640
- **NARDI, S. et al.** *Molecules,* 2021, vol. 26, 2256
- **SHAH, Z.H. et al.** *Frontiers in Plant Science,* 2018, vol. 9, 263
- **LAMAR, R.T. et al.** *Journal of AOAC International,* 2014, vol. 97, 721-730
- **VALDRIGHI, M.M. et al.** *Agriculture Ecosystems and Environment,* 1996, vol. 58, 133-144
- **EYHERAGUIBEL, B. et al.** *Bioresource Technology,* 2008, vol. 99, 4206-4212
- **JURADO, M.M. et al.** *Journal of Environmental Management,* 2014, vol. 133, 355-364
- **VARGAS-GARCIA, M.C. et al.** *Process Biochemistry,* 2006, vol. 41, 1438-1443
- **VALDRIGHI, M.M. et al.** *Compost Science and Utilization,* 1995, vol. 3 (1), 30-38
- **VALLINI, G. et al.** *Biology and Fertility of Soils,* 1997, vol. 24, 243-248
- **SUÁREZ-ESTRELLA, F. et al.** *Dynamic Soil, Dynamic Plant,* 2008, vol. 2 (1), 90-95
- **SUÁREZ-ESTRELLA, F. et al.** *Dynamic Soil, Dynamic Plant,* 2008, vol. 2 (1), 96-102
- **BROWN et al.** *Advances in Agronomy,* 2014, vol. 124, 37
- *Using tomato waste to make agricultural fertilisers, URL:https://agrimax.iris-eng.com/wp-content/uploads/2017/05/Using-tomato-waste-to-make-agricultural-fertilisers.pdf*
- **ZUCCONI, F. et al.** Composting of Agricultural and other Wastes. Elsevier Applied Science Publication, 1985, 73-86